# EUROPÄISCHE PATENTSCHRIFT

(11) **EP 1 561 926 B1**
(45) Veröffentlichungstag und Bekanntmachung des Hinweises auf die Patenterteilung: **11.01.2012**
(21) Anmeldenummer: 04100476.3
(22) Anmeldetag: 09.02.2004
(51) Int. Cl.: F02B 75/06, F02B 67/04, F01L 1/02

(54) **BAUEINHEIT AUS SCHWUNGRAD UND RITZEL IN VERBRENNUNGSMOTOREN**
FLYWHEEL AND GEAR UNIT FOR AN INTERNAL COMBUSTION ENGINE
MODULE DE CONSTRUCTION D'UN VOLANT ET PIGNON POUR UN MOTEUR A COMBUSTION INTERNE

(43) Veröffentlichungstag der Anmeldung: 10.08.2005
(73) Patentinhaber: Ford Global Technologies, LLC, A subsidary of Ford Motor Company, Dearborn, MI 48126 (US)
(72) Erfinder: Figura, Michael Georg, 41542, Dormagen (DE); Kluge, Torsten, 51491, Overath (DE)
(74) Vertreter: Drömer, Hans-Carsten

(56) Entgegenhaltungen:
- WO-A-00/47362
- CH-A- 326 689
- GB-A- 719 095
- GB-A- 2 312 474
- US-A- 2 226 596

## Beschreibung

Die Erfindung betrifft einen Verbrennungsmotor mit zumindest einer Kurbelwelle, an der zumindest an deren hinteren Seite ein Schwungrad angeordnet ist, wobei der Kurbelwelle an der Seite des Schwungrades ein Ritzel zugeordnet ist, das mit dem Schwungrad verbunden ist.

Derartige Verbrennungsmotoren sind bekannt, wobei ein Primärtrieb der Verbrennungsmotoren auf die Seite des Schwungrades, also auf eine Hinterseite der Kurbelwelle verlagert ist. Dies hat den Vorteil, daß hier ein Schwingungsknoten bezüglich Torsionsschwingungen der Kurbelwelle liegt. Durch die verringerten Drehschwingungen können die Elemente des Primärtriebs nun wesentlich kleiner ausgeführt werden, da ein Großteil der Momente und Kräfte im Primärtrieb durch eben diese Drehschwingungen hervorgerufen wird.

Als ein Hauptnachteil bei den bekannten Verbrennungsmotoren dieser Art ist anzusehen, daß es zu einer Stapelung von Elementen kommt, da die Kurbelwelle an dieser Stelle das komplette Motormoment übertragen muß.

Das Ritzel und das Schwungrad werden bei den bekannten Anordnungen getrennt voneinander auf einen Wellenabsatz aufgebracht und verschraubt. Da die Verbindung im allgemeinen reibschlüssig (sehr hohe Reibradien und Klemmkräfte) ist, müssen entsprechend große Durchmesser für Ritzel, insbesondere Primärtriebritzel vorgesehen werden. Möglich ist aber auch, daß das Ritzel direkt auf die Welle aufgebracht wird, was jedoch sehr teuer und teilweise aufgrund der Wellengeometrie (Kurbelwangen) sogar unmöglich ist. Das Ritzel bestimmt mit seinem Durchmesser die Größe des gesamten Primärtriebes, da insbesondere bei einem Viertaktmotor eine Übersetzung 2:1 auf die Nockenwelle benötigt wird. Die Nockenwellenräder weisen daher einen doppelten Durchmesser bezogen auf das Primärtriebritzel auf. Der Primärtrieb bestimmt die Gehäusegröße des Motors an dieser Stelle.

Derzeitige Kurbelwellen, Schwungräder und Primärtriebritzel sind separate, demontierbare Bauteile. Ein Herstellen von Kontaktflächen zwischen beiden Komponenten und Befestigungssysteme zur Montage der beiden Elemente auf der Kurbelwelle sind sehr kostenintensiv und erhöhen die Komplexität. Zusätzlich benötigt diese demontierbare Ausgestaltung einen extra Bauraum und wirkt sich somit nachteilig auf das Packaging des Verbrennungsmotors aus.

Die GB 719 095 A offenbart einen Verbrennungsmotor mit zumindest einer Kurbelwelle, an der zumindest an der hinteren Seite ein Schwungrad angeordnet ist. Der Kurbelwelle ist an der Seite des Schwungrades ein Ritzel zugeordnet. Das Ritzel kann einstückig mit dem Schwungrad hergestellt werden, wobei beide Bauteile auch separat hergestellt werden können. Bei einer getrennten Herstellung von Ritzel und Schwungrad können beide Bauteile formschlüssig beispielsweise über eine Klauenkupplung miteinander verbunden werden.

Der Erfindung liegt die Aufgabe zugrunde, einen verbesserten Verbrennungsmotor der eingangs genannten Art zur Verfügung zu stellen, der mit einfachen Mitteln in den Herstellungskosten reduziert ist, wobei der Primärtrieb den konstruktiven Anforderungen im Hinblick auf einen möglichst geringen Raumbedarf entsprechen soll.

Erfindungsgemäß wird die Aufgabe durch die Merkmale des Anspruchs 1 gelöst.

Die Erfindung trägt dem Umstand Rechnung, daß die im Stand der Technik bekannte Anordnung von zueinander separaten Bauteilen (Schwungrad und Ritzel) über die gesamte Lebensdauer des Motors wegen effektiver Weiterentwicklungen zu Servicezwecken nicht mehr gelöst werden muß. Von daher wird eine demontierbare Anordnung von Schwungrad und Ritzel nicht mehr erforderlich sein. Wobei allerdings die gesamte Einheit gleichwohl demontierbar ausgestaltet sein kann.

Günstig im Sinne der Erfindung ist, wenn das Ritzel zur Ausbildung der stoffschlüssigen Verbindung mit dem Schwungrad verklebt ist, wobei zur Ausbildung der stoffschlüssigen Verbindung auch eine Lötung oder Schweißung, insbesondere Reibschweißung, vorgesehen werden kann. Das Ritzel und das Schwungrad sind somit zu einer baulichen Einheit zusammengefaßt. Hierdurch entfällt eine Trennfuge zwischen dem Ritzel und dem Schwungrad, was sich vorteilhaft auf einen Setzprozeß und auf die Klemmkräfte auswirkt. Von daher kann vorteilhaft mit verkleinerten Reibradien operiert werden. Zudem steigt eine Klemmlänge der applizierbaren Klemmschrauben. Damit ist die bauliche Einheit nahezu unmittelbar nach ihrem Einbringen gebrauchstüchtig, d.h. belastbar. Eine stoffschlüssige Verbindung wirkt sich zudem vorteilhaft auf eine Ausgestaltung einer Kontaktfläche zwischen dem Ritzel und dem Schwungrad aus. Die Kontaktfläche kann dabei beliebige Ausgestaltungen aufweisen, z.B. zylindrisch oder konisch ausgestaltet oder mit einem Gewinde versehen sein. Möglich ist zudem, daß die Kontaktfläche rund, oval, verzahnt oder eckig ausgestaltet ist, wobei die Kontaktfläche aber auch einen Keil aufweisen kann. Selbstverständlich sind beide Bauteile mit ihren jeweiligen Außen- bzw. Innenflächen aneinander angepaßt.

Zweckmäßig im Sinne der Erfindung ist, daß eine Stufe an dem Schwungrad ausgebildet ist. Vorteilhafterweise ist somit eine verbesserte Bearbeitbarkeit des Ritzels möglich, wobei sogar Ringnuten für Kettenlaschen einbringbar sind, wodurch ein Wälzradius des Ritzels nochmals verkleinert ausgeführt werden kann.

Bevorzugte Verbindungen zwischen dem Schwungrad und der Nockenwelle sind hierbei kraftschlüssige Verbindungen, insbesondere Schraub- und/oder Schrumpfverbindungen. Möglich ist aber auch, daß das Schwungrad sowohl kraftschlüssig als auch stoffschlüssig mit der Kurbelwelle verbunden ist, wobei zur stoffschlüssigen Verbindung vorzugsweise eine Klebeverbindung ausführbar ist.

Bevorzugterweise wird das Schwungrad mit dem daran stoffschlüssig verbundenen Ritzel in Viertakt-Verbrennungsmotoren eingesetzt. Das Ritzel ist vorzugsweise als Primärtriebritzel ausgestaltet.

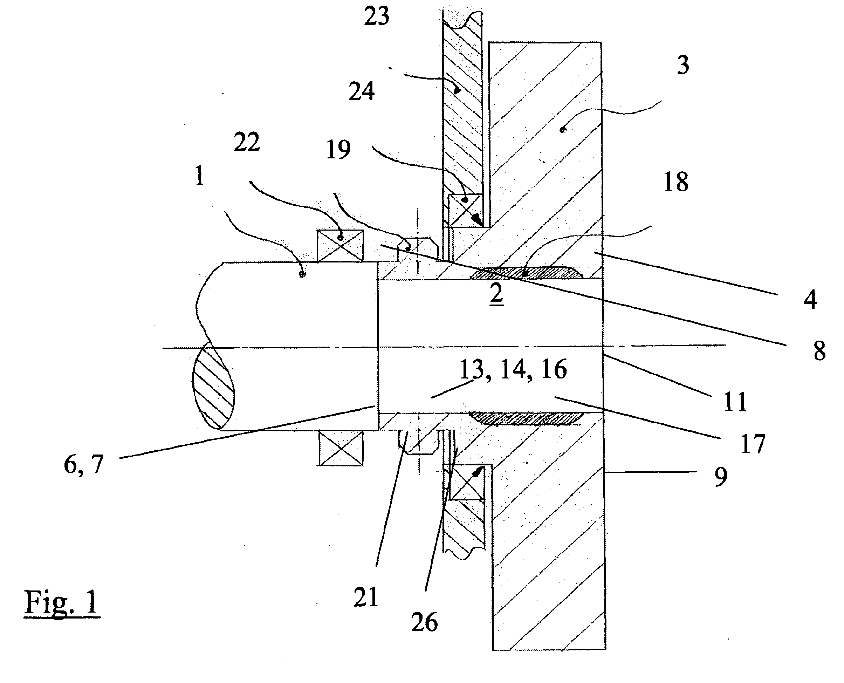

Weitere vorteilhafte Ausgestaltungen der Erfindung sind in den Unteransprüchen und der folgenden Figurenbeschreibung offenbart. Es zeigt die einzige
- Fig. 1: einen Querschnitt durch eine Kurbelwelle mit einem daran montierten Schwungrad.

Figur 1 zeigt eine Kurbelwelle 1, an deren hinteren Ende 2 ein Schwungrad 3 montiert ist. Das Schwungrad 3 weist eine Mittenbohrung 4 auf, so daß das Schwungrad 3 auf das hintere Ende 2 der Kurbelwelle 1 aufgeschoben werden kann.

Das hintere Ende 2 der Kurbelwelle 1 ist in seinem Durchmesser geringer als die übrige Kurbelwelle 1. Von daher wird in einem Übergang 6 des hinteren Endes 2 zur übrigen Kurbelwelle 1 eine Anlagefläche 7 ausgebildet. Das Schwungrad ist mit seinem Aufschiebende 8 bis zur Anlagefläche 7 auf das hintere Ende 2 der Kurbelwelle 1 aufgeschoben, so daß das Schwungrad 3 mit seinem zum Aufschiebende 8 gegenüberliegenden Ende 9 mit einem freien Ende 11 des hinteren Endes 2 fluchtet.

Zur Verbindung des Schwungrades 3 mit der Kurbelwelle 1 kann eine kraftschlüssige Verbindung, insbesondere eine Schraub- und/oder Schrumpfverbindung gewählt werden. In dem in der einzigen Figur dargestellten Ausführungsbeispiel ist eine stoffschlüssige Verbindung in einer Kontaktzone 13, in der sich eine Innenfläche 14 der Mittenbohrung 4 und eine Außenfläche 16 der Kurbelwelle 1 gegenüberliegen, eine Tasche 17 in die Innenfläche 14 der Mittenbohrung 4 zur Aufnahme eines Klebstoffs 18 eingearbeitet. Die Tasche 17 kann alternativ in der Kurbelwelle 1 eingearbeitet werden und ist in der einzigen Figur überproportional groß dargestellt, um diese Einzelheit deutlich sichtbar zu machen. Die Tasche 17 ist zur Ausbildung der stoffschlüssigen Klebeverbindung aber nicht unbedingt erforderlich. Der in der Tasche 17 eingebrachte Klebstoff 18 verbindet das Schwungrad 3 mit der Kurbelwelle 1, indem er sowohl an der Innenfläche 14 der Bohrung 4 als auch an der Außenfläche 16 der Kurbelwelle 1 anhaftet. Möglich ist, daß an der Anlagefläche 7, an der das Aufschiebende 8 anliegt, ebenfalls ein Klebstoff aufgebracht wird, so daß auch hier eine stoffschlüssige Verbindung vorgesehen werden kann. Selbstverständlich ist es möglich im Sinne der Erfindung, eine stoffschlüssige Klebeverbindung mit einer kraftschlüssigen Verbindung zur Verbindung des Schwungrades mit der Kurbelwelle zu kombinieren. Dies würde sich positiv auf eine gesteigerte Momentenfestigkeit auswirken.

Dem Schwungrad 3 ist ein Ritzel 19, vorzugsweise ein Primärtriebritzel zugeordnet. Das Ritzel 19 ist direkt mit dem Schwungrad 3 zumindest stoffschlüssig verbunden. Zur stoffschlüssigen Verbindung kann eine Klebeverbindung, Lötverbindung oder Schweißverbindung, insbesondere eine Reibschweißverbindung, vorgesehen sein. In dem dargestellten Ausführungsbeispiel ist das Ritzel 19 einstückig mit dem Schwungrad 3 hergestellt. Hierzu ist eine Stufe 21 in der Nähe des Aufschiebendes 8 des Schwungrades 3 angeordnet, die entsprechend einem Kettenrad ausgestaltet ist. Zusätzlich können an dem Ritzel 19 während der Herstellung Ringnuten für Kettenlaschen eingebracht werden, wodurch ein Wälzradius des Ritzels erheblich verkleinert werden kann.

Der Kurbelwelle 1 ist ein herkömmliches Lager 22 in üblicher Weise zugeordnet. Die Kurbelwelle 1 mit dem daran montierten Schwungrad 3 ist in einem Gehäuse 23 in bekannter Weise aufgenommen. Eine Dichtung 24 ist auf einer weiteren Stufe 26 des Schwungrades 3 angeordnet und dichtet zum Gehäuse 23 ab.

## Patentansprüche

1. Verbrennungsmotor mit zumindest einer Kurbelwelle (1), an der zumindest an deren hinteren Seite (2) ein Schwungrad (3) angeordnet ist, wobei der Kurbelwelle (1) an der Seite (2) des Schwungrades (3) ein Ritzel (19) zugeordnet ist, das mit dem Schwungrad (3) verbunden ist, **dadurch gekennzeichnet, daß**
das Ritzel (19) zumindest stoffschlüssig mit dem Schwungrad (3) verbunden ist, wobei das Ritzel (19) zur Ausbildung der stoffschlüssigen Verbindung mit dem Schwungrad (3) verklebt, verlötet oder verschweißt ist .

2. Verbrennungsmotor nach Anspruch 1 oder 2,
**dadurch gekennzeichnet, daß**
das Ritzel (19) derart mit dem Schwungrad (3) hergestellt ist, daß eine Stufe (21) an dem Schwungrad (3) ausgebildet ist.

## Claims

1. Internal combustion engine having at least one crankshaft (1) on which, at least at the rear side (2) thereof, there is arranged a flywheel (3), wherein at the side (2) of the flywheel (3), the crankshaft (1) is assigned a pinion (19) which is connected to the flywheel (3),
**characterized in that**
the pinion (19) is connected to the flywheel (3) at least cohesively, wherein the pinion (19) is adhesively bonded, soldered or welded to the flywheel (3) to form the cohesive connection.

2. Internal combustion engine according to Claim 1,
**characterized in that**
the pinion (19) is manufactured with the flywheel (3) in such a way that a step (21) is formed on the flywheel (3).

## Revendications

1. Moteur à combustion interne comprenant au moins un vilebrequin (1), sur lequel est disposé un volant d'inertie (3) au moins sur son côté arrière (2), le vilebrequin (1) étant associé, du côté (2) du volant d'inertie (3), à un pignon (19) qui est connecté au volant d'inertie (3),
**caractérisé en ce que**
le pignon (19) est connecté au moins par engagement par liaison de matière au volant d'inertie (3), le pignon (19), pour réaliser l'engagement par liaison de matière, étant collé, brasé ou soudé au volant d'inertie (3).

2. Moteur à combustion interne selon la revendication 1,
**caractérisé en ce que**
le pignon (19) est fabriqué avec le volant d'inertie (3) de telle sorte qu'un gradin (21) soit réalisé sur le volant d'inertie (3).
